# FASCICULE DE BREVET EUROPEEN

(11) **EP 3 045 357 B1**
(45) Date de publication et mention de la délivrance du brevet: **20.05.2020**
(21) Numéro de dépôt: 15200929.6
(22) Date de dépôt: 17.12.2015
(51) Int. Cl.: B60S 1/38, B60S 1/40

(54) **CAPOT D ESSUIE-GLACE CONFIGURÉ POUR RECOUVRIR UNE PARTIE TERMINALE D'UN BRAS D'ESSUIE-GLACE**
ABDECKUNG EINES SCHEIBENWISCHERS, DIE FÜR DIE ABDECKUNG DES ENDTEILS EINES SCHEIBENWISCHERARMS KONFIGURIERT IST
CAP FOR A WINDSCREEN WIPER FOR COVERING AN END PORTION OF A WIPER ARM

(30) Priorité: 16.01.2015 FR 1550346
(43) Date de publication de la demande: 20.07.2016
(73) Titulaire: Valeo Systèmes d'Essuyage, 78322 Le Mesnil Saint Denis (FR)
(72) Inventeur: KUCHLY, Nicolas, 63500 Issoire (FR); TERRASSE, William, 63270 VIC LE COMTE (FR); GARIBALDI, Vincent, 63500 ISSOIRE (FR)
(74) Mandataire: Valeo Systèmes d'Essuyage

(56) Documents cités:
- EP-A1- 1 745 998
- DE-A1- 10 259 480
- DE-A1-102010 062 940
- DE-A1-102011 079 486
- US-A1- 2014 259 504

## Description

La présente invention se rapporte à la fixation d'un balai d'essuie-glace sur un bras, en particulier de véhicule automobile. Elle concerne plus particulièrement un capot recouvrant la liaison entre le bras et le balai.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Le document DE 10259480 A1 montre un capot selon le préambule de la première revendication.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du bras d'essuie-glace, la dénomination inférieure contenant le plan du pare-brise.

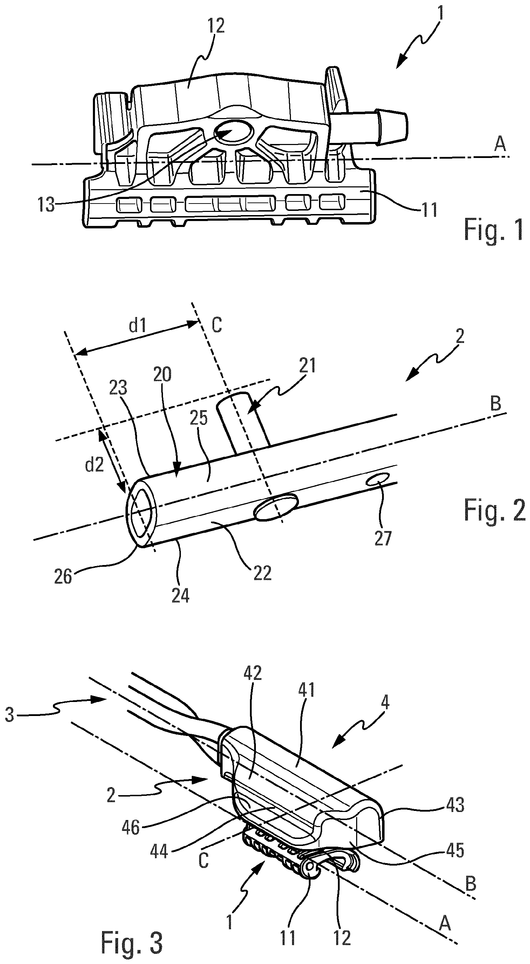

Le balai est rattaché au bras d'entraînement par un système de connexion comportant un connecteur, qui est une pièce solidarisée au balai. Le connecteur 1 représenté sur la figure 1 comporte un étrier 11 allongé suivant un axe A et destiné à être solidaire du balai d'essuie glace, non représenté, suivant ledit axe A, en enserrant par exemple une vertèbre de rigidification ou un corps longitudinal. Le connecteur comporte également, dans sa partie supérieure, une bride 12 allongée suivant une direction parallèle audit axe A et traversée par un orifice 13 de section circulaire, perpendiculaire audit axe A.

L'invention concerne plus particulièrement un système de connexion pour un bras de type dit à pivot latéral, dont un exemple d'extrémité terminale 2 de liaison, configurée pour coopérer avec le connecteur 1, est représenté sur la figure 2. Cette extrémité terminale comporte un premier élément allongé 20 suivant un axe B, sensiblement dans le prolongement du bras, non représenté dans son ensemble. En outre, une tige cylindrique 21 s'étend perpendiculaire à partir de l'élément allongé 20 et forme un second élément.

L'orifice 13 du connecteur 1 est configuré pour recevoir la tige 21 de la partie terminale 2, afin de lier le connecteur 1 à la partie terminale 2 par une liaison pivot autour de la tige 21. Le balai d'essuie-glace peut ainsi pivoter autour de l'axe C de la tige 21, pour s'adapter à la surface de la vitre lors du mouvement de va et vient de l'essuie-glace.

Par rapport à ce qui a été décrit, il reste à installer des moyens de retenue du connecteur 1 sur la tige 21, en particulier lors des mouvements de va et vient. De plus, ces moyens doivent permettre un remplacement facile du balai d'essuie-glace avec son connecteur 1.

Par ailleurs, pour diverses raisons, on souhaite en général protéger des intempéries la partie terminale de liaison du bras d'essuie-glace.

La demanderesse s'est fixé pour objectif de réaliser au moins une partie de ces fonctions de manière simple et économique, notamment en minimisant le nombre de pièces.

L'invention propose à cet effet un capot d'essuie-glace configuré pour recouvrir une partie terminale d'un bras d'essuie-glace, ladite partie terminale étant configurée pour être reliée à un balai d'essuie-glace et comportant un premier élément destiné à s'étendre selon une première direction, dite longitudinale, par rapport au capot et un second élément définissant un axe de pivotement du balai vis-à-vis du bras destiné à s'étendre dans une direction transversale à la première direction, ledit capot comprenant un premier logement de réception desdits premier et deuxième éléments de la partie terminale, ledit premier logement étant limité dans la direction transversale par au moins une paroi, le capot étant caractérisé en ce qu'il a une forme allongée le long d'un axe d'allongement et en ce que ledit premier logement comporte une première partie s'étendant le long dudit axe d'allongement et configurée pour recevoir ledit premier élément.

Le capot selon l'invention peut comprendre une ou plusieurs des caractéristiques suivantes, prises isolément les unes des autres ou en combinaison les unes avec les autres :
- ledit premier logement comporte une seconde partie s'étendant perpendiculairement audit axe d'allongement et configurée pour recevoir ledit second élément ;
- ladite seconde partie s'étend entre deux parois longitudinales latérales du capot, qui forment des extrémités longitudinales de cette seconde partie ;
- ledit capot comprend un second logement de réception d'une partie du balai d'essuie-glace, telle qu'un connecteur dudit balai ;
- le second logement s'étend le long dudit axe d'allongement ;
- ladite seconde partie du premier logement traverse ou communique avec ledit second logement ;
- ledit capot comprend des moyens de fixation configurés pour coopérer avec ledit bras ;
- lesdits moyens de fixation comprennent des moyens d'encliquetage élastique et/ou d'engagement ;
- lesdits moyens de fixations sont situés dans ledit premier logement, de préférence dans la première partie ;
- lesdits moyens de fixation comprennent un ergot configuré pour être engagé dans un évidement d'extrémité dudit premier élément du bras, qui est par exemple tubulaire ;
- lesdits moyens de fixation sont situés dans ledit premier logement, de préférence dans la première partie ;
- la première partie du premier logement et le second logement présentent chacun une section transversale ayant sensiblement une forme en U, avec une paroi longitudinale commune.

La présente invention concerne également un bras capoté d'essuie-glace, comportant un bras comprenant une partie terminale de liaison à un balai d'essuie-glace, ladite partie terminale étant configurée pour être reliée à un balai d'essuie-glace et comportant un premier élément longitudinal et un second élément transversal définissant un axe de pivotement du balai vis-à-vis du bras, et un capot tel que décrit précédemment.

Le bras capoté selon l'invention peut comprendre une ou plusieurs des caractéristiques suivantes, prises isolément ou en combinaison les unes avec les autres :
- le capot comprend des moyens de fixations coopérant avec ledit premier élément du bras ;
- ledit premier élément du bras est tubulaire et comporte un évidement longitudinal interne ayant une extrémité débouchant sur une ouverture, et le capot comprend un ergot de fixation destiné à s'engager dans ladite ouverture.

La présente invention concerne également un ensemble comportant un bras capoté tel que décrit précédemment et un connecteur de raccordement du bras à un balai d'essuie-glace, ledit connecteur comportant un orifice de réception dudit second élément du bras ainsi que des moyens de liaison à au moins un organe de balai, tel qu'une vertèbre de rigidification ou un corps longitudinal du balai.

Le connecteur d'un tel ensemble peut comprendre une partie comportant ledit orifice, qui est logée dans ledit deuxième logement.

L'invention concerne encore un procédé de montage d'un organe de connexion de balai d'essuie-glace sur une partie terminale de liaison d'un bras d'essuie-glace, ladite partie terminale comportant un premier élément longitudinal et un second élément transversal définissant un axe de pivotement du balai vis-à-vis du bras, ledit organe de connexion comportant un orifice de réception dudit second élément du bras, procédé comportant une étape de placement dudit organe de connexion dans laquelle le second élément du bras est introduit dans ledit orifice de l'organe de connexion, caractérisé en qu'il comporte une étape ultérieure dans laquelle un capot tel que décrit précédemment est fixé sur la partie terminale de liaison du bras, de manière à recouvrir cette dernière et au moins une partie de l'organe de connexion.

Avantageusement, ledit capot est fixé sur la partie terminale de liaison par des moyens d'encliquetage élastiques et/ou d'engagement coopérant avec ledit premier élément du bras.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un connecteur d'essuie-glace utilisé dans un ensemble selon l'invention,
- la figure 2 est une vue schématique en perspective de la partie terminale d'un bras d'essuie-glace utilisé dans un ensemble selon l'invention,
- la figure 3 est une vue schématique partielle en perspective d'un ensemble selon l'invention, en configuration de fonctionnement,
- la figure 4 est une vue schématique de dessus d'un capot selon l'invention,
- la figure 5 est une vue schématique de dessous d'un capot selon l'invention,
- la figure 6 est une vue schématique en perspective d'un capot selon l'invention,
- la figure 7 est une vue schématique en perspective d'un ensemble selon l'invention, coupé selon un plan vertical et le capot étant relevé,
- la figure 8 est une vue schématique de côté de l'ensemble de la figure 7, et
- la figure 9 est une vue schématique de côté de l'ensemble de la figure 3, coupé selon le même plan vertical que l'ensemble de la figure 7.

Il faut noter que les figures exposent l'invention de manière détaillée pour mettre en œuvre l'invention, lesdites figures pouvant bien entendu servir à mieux définir l'invention le cas échéant.

Un ensemble pour un essuie-glace selon l'invention comprend, en référence à la figure 3, un bras 3 d'entraînement pour un balai d'essuie-glace, avec sa partie terminale 2 de liaison, un connecteur 1 destiné à être fixé à un balai d'essuie-glace, non représenté, et un capot 4 recouvrant la partie terminale 2 et le connecteur 1.

Un essuie-glace complet comprend en général le bras capoté et le balai qui n'est pas ici représenté et qui est de préférence du type « plat », de l'anglais « flat blade », bien connu de l'homme du métier. L'essuie-glace comprend également une tête d'entraînement, non représentée sur les figures, qui permet généralement de relier l'extrémité du bras 3 opposée à ladite partie terminale 2, à un arbre de sortie d'un moteur.

En référence à la figure 2, la partie terminale 2 de liaison comporte un premier élément allongé 20 qui est ici formé par un tube présentant des parois latérales 22, 23, sensiblement planes et perpendiculaires au plan de rotation du bras d'essuie-glace. Ces parois latérales 22, 23 sont raccordées par des parois respectivement inférieure 24 et supérieure 25, pouvant avoir une forme arrondie autour d'un axe parallèle à l'axe B. Ici, le tube 20 est creux et les bords de ses parois 22, 23, 24, 25 forment les bords périphériques 26 d'un évidement s'ouvrant à son extrémité libre.

Ce tube 20 peut, par exemple, être formé à partir d'une tôle pliée, de manière à avoir une rigidité suffisante.

La tige 21 cylindrique transversale, définissant un axe de pivotement C, est fixée sur le tube 20 à une distance d1 des bords périphériques 26 de l'ouverture d'extrémité, et sensiblement à mi-hauteur entre les parois inférieure 24 et supérieure 25. Ici, la tige 21 est maintenue en traversant les deux parois latérales 22, 23 du tube 20. Elle s'étend sur une distance d2 à l'extérieur de la paroi latérale 23, du côté où doit être installé le connecteur 1.

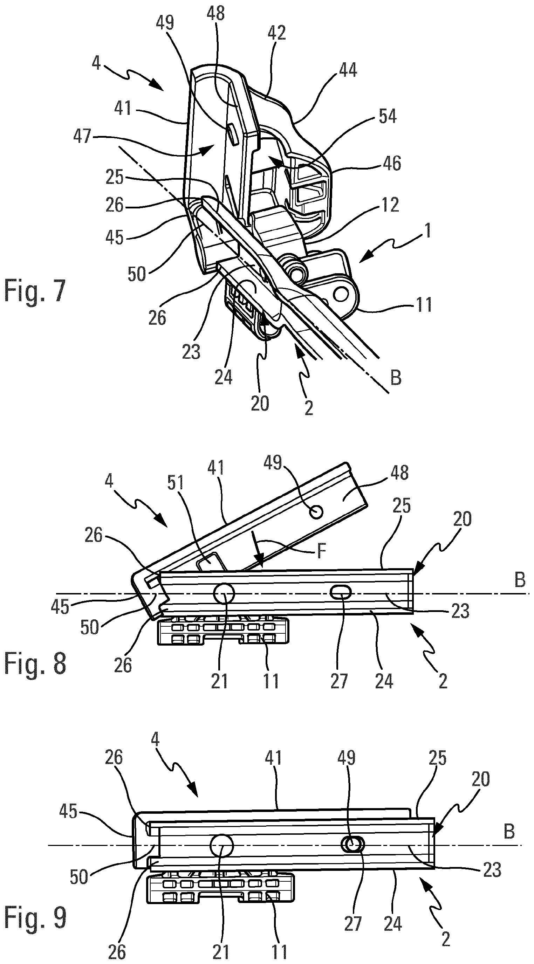

Par ailleurs, un orifice 27 sensiblement circulaire traverse la paroi latérale 22, après la tige 21 en partant des bords périphériques 26 de l'ouverture du tube 20. De préférence, un autre orifice 27, visible sur les figures 8 et 9, semblable au précédent mais décalé longitudinalement, traverse l'autre paroi latérale 23.

Comme indiqué précédemment, en référence à la figure 1, le connecteur 1 comporte un étrier 11 destiné à fixer le balai d'essuie-glace selon un axe A, non représenté. Cet étrier 11 s'étend longitudinalement sur la longueur du connecteur 1 et en forme la partie inférieure. Comme visible plus particulièrement sur la figure 3, il forme une rainure longitudinale, centrée sur l'axe A et ouverte vers le bas, avec deux parois latérales pour insérer un élément allongé, vertèbre de rigidification ou corps allongé d'un balai d'essuie-glace.

Une bride longitudinale 12, avec un orifice transversal 13 destiné à coopérer avec la tige 21 pour permettre une rotation du balai autour de l'axe C de pivotement, est fixée sur la partie supérieure de l'étrier 11. La paroi supérieure de la bride 12 a sensiblement une forme en V selon la direction longitudinale, sa partie la plus éloignée de l'étrier 11 se situant sensiblement au centre de l'orifice 13. La bride 12 est décalée latéralement par rapport à l'axe central A de l'étrier 11.

On va maintenant décrire plus en détail le capot 4 en référence aux figures 3, 4, 5 et 6.

Le capot 4 a ici une forme allongée suivant une direction longitudinale parallèle à l'axe B de la partie terminale 2 du bras 3, lorsqu'il est installé sur cette dernière. Il comporte une paroi supérieure composée ici en deux parties. Une première partie 41 est alignée sur l'axe B et a une forme sensiblement cylindrique, arrondie autour d'un axe parallèle à l'axe B. Une deuxième partie 42, accolée à la première partie 41, est ici sensiblement plane et allongée. Des parois latérales 43, 44 sensiblement parallèles à l'axe B sont respectivement reliées par leurs bords supérieurs à la première 41 et à la seconde 42 partie de la paroi supérieure. Une paroi de fond 45 relie les extrémités longitudinales extérieures des première 41 et deuxième 42 parties de la paroi supérieure, et des parois latérales 43, 44.

En référence à la figure 3, la paroi supérieure 41, 42 du capot 4 est destinée à recouvrir la tige 21 et, au moins en partie, le tube 20 du bras 3, ainsi qu'une partie du connecteur 1. La première partie 41 de la paroi supérieure couvre l'extrémité du tube 20, y compris l'attache de la tige 21 transversale. La deuxième partie 42 de la paroi supérieure s'étend latéralement par rapport à la première partie 41, de manière à recouvrir entièrement la partie de la tige 21 sortant de la paroi latérale 23, ainsi que la bride longitudinale 12 du connecteur 1, lorsque ce dernier est installé.

Si l'on considère la partie terminale 2 du bras 3 et la bride 12 du connecteur lorsqu'il est installé, les parois latérales 43, 44 sont destinées à s'étendre sur des côtés de ces éléments, et la paroi de fond 45 est destinée à s'étendre autour de leurs extrémités longitudinales extérieures.

Ici, une plateforme 46 s'étend à partir du bord inférieur de la paroi latérale 44, de manière sensiblement perpendiculaire à cette dernière. Par ailleurs, les bords inférieurs des parois du capot 4 s'arrêtent sensiblement dans le même plan que la plateforme 46 et le capot 4 comporte plusieurs compartiments s'ouvrant vers le bas dans ledit plan.

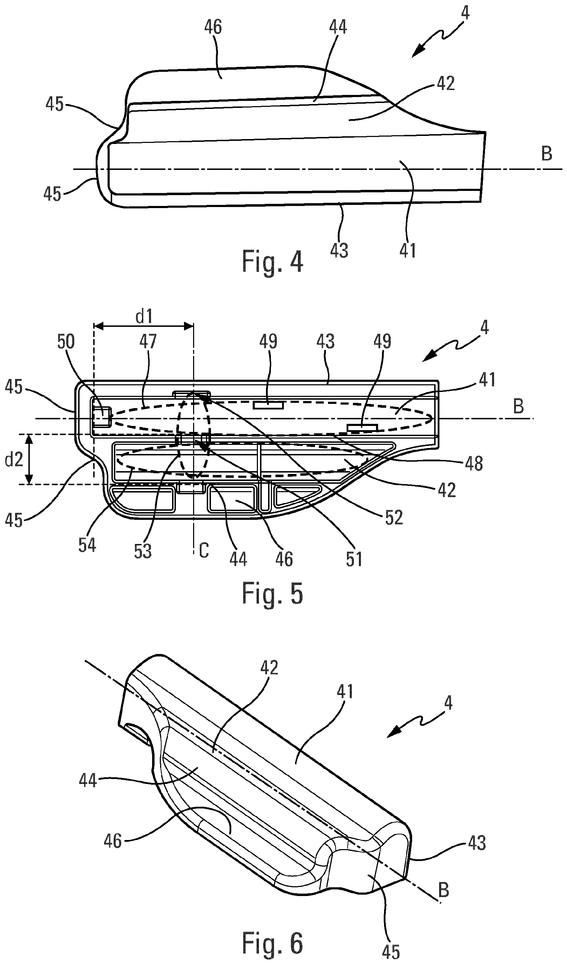

Un premier compartiment 47, destiné au tube 20 du bras 3, qui est délimité par les faces internes de la première partie 41 de la paroi supérieure, de la paroi de fond 45 et de la paroi latérale 43, et par une paroi longitudinale intermédiaire 48 sensiblement parallèle à la paroi latérale 43. Le premier compartiment 47, indiqué par un ovale en traits discontinus en figure 5, a une forme générale sensiblement cylindrique, de section transversale ayant sensiblement la forme d'un U renversé. Cette forme est configurée pour s'adapter à la forme de la paroi supérieure 25 et des parois latérales 22, 23 du tube 20.

La paroi latérale 43 et la paroi longitudinale intermédiaire 48 comportent de préférence chacune un plot 49 s'étendant perpendiculairement à l'intérieur de ce premier compartiment 47. Ces plots 49 sont à des distances de la paroi de fond 45 comparables aux distances qui séparent les orifices 27 des parois latérale 22, 23 du tube 20 et l'extrémité 26 de ce dernier. Ils sont destinés à s'engager dans ces orifices 27.

De même, un ergot 50 s'étend perpendiculairement à la paroi de fond 45 à l'intérieur du compartiment 47. Sa taille lui permet de s'engager entre les bords périphériques 26 de l'évidement d'extrémité du tube 20 en les épousant, du moins à sa base contre la paroi de fond 45.

La paroi longitudinale intermédiaire 48 comporte une échancrure verticale 51 située sensiblement à la distance d1 de la paroi de fond 45 et de largeur sensiblement égale au diamètre de la tige 21. A la même distance d1 de la paroi de fond 45, la face interne de paroi latérale 43 comporte une cavité 52 de forme similaire à celle de ladite échancrure 51. Par ailleurs, la face interne de la paroi latérale 44 se trouve sensiblement à une distance d2 de la face opposée de la paroi longitudinale intermédiaire.

De cette manière, un deuxième compartiment 53, indiqué par un ovale en traits discontinus sur la figure 5, est ménagé dans le capot 4, entre la paroi latérale 43 et la paroi latérale 44, au travers de l'échancrure 51 pratiquée dans la paroi longitudinale intermédiaire 48. Ce deuxième compartiment 53 est destiné à recevoir la tige 21.

Le premier compartiment 47 et le deuxième compartiment 53 forment respectivement une première 47 et une seconde 53 partie d'un premier logement, destiné à recevoir la partie terminale 2 du bras.

L'intérieur du capot 4 comporte encore un troisième compartiment 54, qui forme un deuxième logement 54 destiné à recevoir la bride longitudinale 12 du connecteur 1 lorsqu'elle est installée autour de la tige 21. Ce troisième compartiment 54, indiqué par un ovale en traits discontinus sur la figure 5, est délimité par les faces internes de la deuxième partie 42 de la paroi supérieure, de la paroi de fond 45 et de la paroi latérale 44, et par la paroi longitudinale intermédiaire 48.

Le troisième compartiment 54 a une forme générale sensiblement cylindrique, de section transversale ayant sensiblement la forme d'un U renversé. Cette section est adaptée pour laisser passer la bride 12 autour de la tige 21, au niveau de son orifice 13, donc à l'endroit où sa paroi supérieure est la plus éloignée de l'étrier 11. La section en U du troisième compartiment 54 laisse donc des marges de débattement aux extrémités longitudinales de la bride 12, afin de permettre des mouvements de rotation d'ampleur limitée autour de la tige 21.

On notera par ailleurs que le capot est formé dans un matériau plastique, par exemple de type polyoxyméthylène (POM), qui lui confère une certaine raideur et un peu d'élasticité pour de petites déformations.

On va maintenant décrire l'assemblage formé de la partie terminale 2 du bras 3, du connecteur 1 et du capot 4. Comme on peut le voir sur la figure 3, lorsque l'ensemble est installé, le capot 4 recouvre la partie terminale 2 du bras ainsi que la bride longitudinale 12 du connecteur 1. L'étrier 11 du connecteur 1 n'est ici que partiellement recouvert, il se trouve sous le tube 20 et sous les bords inférieurs des parois latérales 43, 44 et de la paroi de fond 45 du capot 4.

Le capot 4 retient ainsi le connecteur 1 sur la tige transversale 21 de la partie terminale 2 du bras 3. Le connecteur 1 peut tourner autour de la tige 21, du fait de l'espacement entre l'étrier 11 et les bords inférieurs des parois 43, 44, 45 du capot 4 et du fait des débattements ménagés pour la bride 12 dans le troisième compartiment 54 du capot 4.

Selon l'invention, l'assemblage peut être ainsi réalisé selon un procédé illustré aux figures 7, 8 et 9.

Dans une étape préliminaire, le connecteur 1 est installé sur la partie terminale 2 par une translation le long de la tige 21, l'étrier 11 étant placé sous le tube 20.

Dans une étape suivante, en référence aux figures 7 et 8, le capot 4 est présenté relevé devant la partie terminale 2, et son ergot 50 est engagé entre les bords périphériques 26 de l'évidement d'extrémité du tube 20.

Sur la figure 7, on peut voir la position relative du capot 4 par rapport au connecteur 1 installé sur la partie terminale 2. On observe ainsi que la paroi longitudinale intermédiaire 48 est destinée à s'insérer entre la paroi latérale 23 du tube 20 et la bride longitudinale 12 du connecteur 1.

La figure 8 permet de mieux voir la forme de l'ergot 50 permettant de l'insérer entre les bords périphériques 26 de l'évidement d'extrémité, le capot 4 étant en position relevée.

Dans une troisième étape, le capot 4 est rabattu sur le tube 20, suivant le sens de la flèche F de la figure 8, pour être mis dans la position indiquée sur la figure 9, dans laquelle la première partie 41 de la paroi supérieure du capot 4 est plaquée contre la paroi supérieure 25 du tube 20.

Au cours de cette étape, les plots 49 du capot 4 viennent s'insérer dans les orifices 27 des parois latérales 22, 23 du tube 20. On notera par ailleurs que l'écartement entre la paroi latérale 43 et la paroi longitudinale intermédiaire 48 est, de préférence, ajusté de manière à ce que ces parois soient respectivement plaquées contre les parois latérales 22, 23 du tube 20. La nature du matériau du capot 4 permet aux parois 43, 48 de s'écarter pour laisser glisser les plots 49 contre les parois latérales 22, 23 du tube 20, avant de les encliqueter dans les orifices 27.

L'ajustement de l'écartement entre la paroi latérale 43 et la paroi longitudinale intermédiaire 48 permet de maintenir le capot 4 aligné contre le tube 20. Les plots 49 et l'ergot 50 maintiennent, quant à eux, le capot 4 sur le tube 20 dans la direction longitudinale, ainsi que vers le haut et en rotation. Ces éléments fixent donc le capot 4 par rapport à la partie terminale 2 du bras 3 à l'issue de la troisième étape de montage.

De plus, comme on peut le voir sur la figure 7, au cours de cette troisième étape de montage, la paroi longitudinale intermédiaire 48 vient se placer entre la paroi latérale 23 du tube 20 et la bride longitudinale 12. Il n'est pas nécessaire de positionner exactement la bride 12 sur la tige 21 : le positionnement de la bride longitudinale 12 dans le compartiment 54 du capot 4, entre la paroi longitudinale intermédiaire 48 et la paroi latérale 44, se fait naturellement lors du basculement du capot 4.

De cette manière, en plus de sa fonction de protection, le capot 4 assure, à l'issue de la troisième étape de montage, une fonction de positionnement et de maintien du connecteur 1 sur la tige 21.

De manière évidente, le démontage du capot 4 peut se faire en inversant le sens des étapes précédemment décrites, après avoir écarté légèrement les parois latérales 43, 48 du compartiment 47, de manière à dégager les plots 49 des orifices 27. Le démontage du capot 4 permet de libérer le connecteur 1, par exemple pour changer le balai d'essuie-glace.

## Revendications

1. Capot (4) d'essuie-glace configuré pour recouvrir une partie terminale (2) d'un bras (3) d'essuie-glace, ladite partie terminale étant configurée pour être reliée à un balai d'essuie-glace et comportant un premier élément (20) destiné à s'étendre selon une première direction (B), dite longitudinale, par rapport au capot (4) et un second élément (21) définissant un axe (C) de pivotement du balai vis-à-vis du bras destiné à s'étendre dans une direction transversale à la première direction, ledit capot (4) comprenant un premier logement (47, 53) de réception desdits premier (20) et deuxième (21) éléments de la partie terminale (2), ledit premier logement (47, 53) étant limité dans la direction transversale par au moins une paroi (43, 44), le capot étant **caractérisé en ce qu'**il a une forme allongée le long d'un axe (B) d'allongement et **en ce que** ledit premier logement (47, 53) comporte une première partie (47) s'étendant le long dudit axe (B) d'allongement et configurée pour recevoir ledit premier élément (20).

2. Capot (4) selon la revendication 1, **caractérisé en ce que** ledit premier logement (47, 53) comporte une seconde partie (53) s'étendant perpendiculairement audit axe (B) d'allongement et configurée pour recevoir ledit second élément (21).

3. Capot (4) selon la revendication 2, **caractérisé en ce que** ladite seconde partie (53) s'étend entre deux parois longitudinales latérales (43, 44) du capot (4), qui forment des extrémités longitudinales de cette seconde partie (53).

4. Capot (4) selon la revendication 3, **caractérisé en ce qu'**il comprend un second logement (54) de réception d'une partie du balai d'essuie-glace, telle qu'un connecteur (1) dudit balai.

5. Capot (4) selon la revendication 4, **caractérisé en ce que** le second logement (54) s'étend le long dudit axe (B) d'allongement.

6. Capot (4) selon la revendication 5, **caractérisé en ce que** ladite seconde partie (53) du premier logement (47, 53) traverse ou communique avec ledit second logement (54).

7. Capot (4) selon l'une des revendications précédentes, **caractérisé en ce qu'**il comprend des moyens de fixation (49, 50) configurés pour coopérer avec ledit bras (20).

8. Capot (4) selon la revendication 7, **caractérisé en ce que** lesdits moyens de fixation comprennent des moyens d'encliquetage élastique (49) et/ou d'engagement (50).

9. Capot (4) selon la revendication 7 ou 8, **caractérisé en ce que** lesdits moyens de fixation (49, 50) sont situés dans ledit premier logement (47, 53), de préférence dans la première partie (47).

10. Capot (4) selon l'une des revendications 7 à 9, **caractérisé en ce que** lesdits moyens de fixation comprennent un ergot (50) configuré pour être engagé dans un évidement d'extrémité (26) dudit premier élément (20) du bras, qui est par exemple tubulaire.

11. Capot (4) selon l'une des revendications 4 à 10, **caractérisé en ce que** la première partie (47) du premier logement et le second logement (54) présentent chacun une section transversale ayant sensiblement une forme en U, avec une paroi longitudinale (48) commune.

12. Bras capoté d'essuie-glace, comportant un bras (3) comprenant une partie terminale (2) de liaison à un balai d'essuie-glace, ladite partie terminale (2) étant configurée pour être reliée à un balai d'essuie-glace et comportant un premier élément (20) longitudinal et un second élément (21) transversal définissant un axe (C) de pivotement du balai vis-à-vis du bras (3), et un capot (4) selon l'une des revendications 1 à 11.

13. Bras capoté d'essuie-glace selon la revendication 12, **caractérisé en ce que** le capot (4) comprend des moyens de fixation (49, 50) coopérant avec ledit premier élément (20) du bras (3).

14. Bras capoté d'essuie-glace selon la revendication 13, **caractérisé en ce que** ledit premier élément (20) du bras (3) est tubulaire et comporte un évidement longitudinal interne ayant une extrémité débouchant sur une ouverture (26), et **en ce que** le capot (4) comprend un ergot (50) de fixation destiné à s'engager dans ladite ouverture (26).

15. Ensemble comportant un bras capoté selon l'une des revendications 12 à 14 et un connecteur (1) de raccordement du bras (3) à un balai d'essuie-glace, ledit connecteur (1) comportant un orifice (13) de réception dudit second élément (21) du bras (3) ainsi que des moyens de liaison (11) à au moins un organe de balai, tel qu'une vertèbre de rigidification ou un corps longitudinal du balai.

16. Ensemble selon la revendication 15, dans lequel le connecteur (1) comprend une partie (12) comportant ledit orifice (13), qui est logée dans ledit deuxième logement (54).

17. Procédé de montage d'un organe de connexion (1) de balai d'essuie-glace sur une partie terminale (2) de liaison d'un bras (3) d'essuie-glace, ladite partie terminale (2) comportant un premier élément (20) longitudinal et un second élément (21) transversal définissant un axe (C) de pivotement du balai vis-à-vis du bras (3), ledit organe de connexion (1) comportant un orifice (13) de réception dudit second élément (21) du bras (3), procédé comportant une étape de placement dudit organe de connexion (1) dans laquelle le second élément (21) du bras (3) est introduit dans ledit orifice (13) de l'organe de connexion (1), caractérisé en qu'il comporte une étape ultérieure dans laquelle un capot (4) selon l'une des revendications 1 à 11 est fixé sur la partie terminale (2) de liaison du bras (3), de manière à recouvrir cette dernière et au moins une partie de l'organe de connexion (1).

18. Procédé selon la revendication 17, dans lequel ledit capot (4) est fixé sur la partie terminale (2) de liaison par des moyens d'encliquetage élastiques (49) et/ou d'engagement (50) coopérant avec ledit premier élément (20) du bras (3).

## Patentansprüche

1. Abdeckung (4) eines Scheibenwischers, welche dafür ausgelegt ist, um einen Endabschnitt (2) eines Scheibenwischerarms (3) abzudecken, wobei der Endabschnitt dafür ausgelegt ist, um mit einem Scheibenwischerblatt verbunden zu werden, und ein erstes Element (20), welches dafür vorgesehen ist, sich gemäß einer ersten, so genannten longitudinalen Richtung (B), in Bezug auf die Abdeckung (4) zu erstrecken, und ein zweites Element (21) umfasst, welches eine Achse (C) zur Schwenkung des Wischers gegenüber dem Arm definiert und dafür vorgesehen ist, sich in einer Richtung quer zu der ersten Richtung zu erstrecken,
wobei die Abdeckung (4) eine erste Ausnehmung (47, 53) zur Aufnahme des ersten (20) und zweiten (21) Elements des Endabschnitts (2) umfasst, wobei die erste Ausnehmung (47, 53) in der Querrichtung durch mindestens eine Wand (43, 44) begrenzt ist,
wobei die Abdeckung **dadurch gekennzeichnet ist, dass** sie eine entlang einer Erstreckungsachse (B) langgestreckte Form aufweist und dass die erste Ausnehmung (47, 53) einen ersten Abschnitt (47) umfasst, welcher sich entlang der Erstreckungsachse (B) erstreckt und dafür ausgelegt ist, um das erste Element (20) aufzunehmen.

2. Abdeckung (4) nach Anspruch 1, **dadurch gekennzeichnet, dass** die erste Ausnehmung (47, 53) einen zweiten Abschnitt (53) aufweist, welcher sich senkrecht zur der Erstreckungsachse (B) erstreckt und dafür ausgelegt ist, um das zweite Element (21) aufzunehmen.

3. Abdeckung (4) nach Anspruch 2, **dadurch gekennzeichnet, dass** sich der zweite Abschnitt (53) zwischen zwei longitudinalen Seitenwänden (43, 44) der Abdeckung (4) erstreckt, welche die longitudinalen Enden dieses zweiten Abschnitts (53) bilden.

4. Abdeckung (4) nach Anspruch 3, **dadurch gekennzeichnet, dass** sie eine zweite Ausnehmung (54) zur Aufnahme eines Abschnitts des Scheibenwischerblatts, wie beispielsweise ein Verbindungsstück (1) des Wischers, umfasst.

5. Abdeckung (4) nach Anspruch 4, **dadurch gekennzeichnet, dass** sich die zweite Ausnehmung (54) entlang der Erstreckungsachse (B) erstreckt.

6. Abdeckung (4) nach Anspruch 5, **dadurch gekennzeichnet, dass** der zweite Abschnitt (53) der ersten Aufnahme (47, 53) die zweite Aufnahme (54) durchdringt oder mit ihr kommuniziert.

7. Abdeckung (4) nach einem der vorhergehenden Ansprüche, **dadurch gekennzeichnet, dass** sie Befestigungsmittel (49, 50) umfasst, welche dafür ausgelegt sind, um mit dem Arm (20) zusammenzuwirken.

8. Abdeckung (4) nach Anspruch 7, **dadurch gekennzeichnet, dass** die Befestigungsmittel Mittel zum elastische Einrasten (49) und/oder zum Eingriff (50) umfassen.

9. Abdeckung (4) nach Anspruch 7 oder 8, **dadurch gekennzeichnet, dass** die Befestigungsmittel (49, 50) in der ersten Ausnehmung (47, 53), vorzugsweise in dem ersten Abschnitt (47), angeordnet sind.

10. Abdeckung (4) nach einem der Ansprüche 7 bis 9, **dadurch gekennzeichnet, dass** die Befestigungsmittel eine Nase (50) umfassen, welche dafür ausgelegt ist, um mit einer Aussparung eines Endes (26) des ersten Elements (20) des Arms, welcher beispielsweise rohrförmig ist, in Eingriff gebracht zu werden.

11. Abdeckung (4) nach einem der Ansprüche 4 bis 10, **dadurch gekennzeichnet, dass** der erste Abschnitt (47) der ersten Ausnehmung und die zweite Ausnehmung (54) jeweils einen Querschnitt, welcher im Wesentlichen U-förmig ist, mit einer gemeinsamen longitudinalen Wand (48) aufweisen.

12. Mit einer Abdeckung ausgestatteter Scheibenwischerarm, umfassend einen Arm (3), welcher einen Endabschnitt (2) zur Verbindung mit einem Scheibenwischerblatt umfasst, wobei der Endabschnitt (2) dafür ausgebildet ist, um mit einem Scheibenwischerblatt verbunden zu werden, und umfassend ein erstes longitudinales Element (20) und ein zweites Querelement (21), welches eine Achse (C) zur Schwenkung des Wischers gegenüber dem Arm (3) definiert, und eine Abdeckung (4) nach einem der Ansprüche 1 bis 11.

13. Mit einer Abdeckung ausgestatteter Scheibenwischerarm nach Anspruch 12, **dadurch gekennzeichnet, dass** die Abdeckung (4) Befestigungsmittel (49, 50) umfasst, welche mit dem ersten Element (20) des Arms (3) zusammenwirken.

14. Mit einer Abdeckung ausgestatteter Scheibenwischerarm nach Anspruch 13, **dadurch gekennzeichnet, dass** das erste Element (20) des Arms (3) rohrförmig ist und eine innere, longitudinale Ausnehmung umfasst, welche ein in einer Öffnung (26) mündendes Ende aufweist, und dass die Abdeckung (4) eine Befestigungsnase (50) umfasst, welche dafür vorgesehen ist, um in die Öffnung (26) einzugreifen.

15. Anordnung, umfassend einen mit einer Abdeckung ausgestatteten Arm nach einem der Ansprüche 12 bis 14 und ein Verbindungsstück (1) zur Verbindung des Arms (3) mit einem Scheibenwischerblatt, wobei das Verbindungsstück (1) ein Loch (13) zur Aufnahme des zweiten Elements (21) des Arms (3) sowie Mittel zur Verbindung (11) mit mindestens einem Wischerorgan, wie beispielsweise eine Versteifungsleiste oder ein longitudinaler Körper des Wischers, umfasst.

16. Anordnung nach Anspruch 15, bei welcher das Verbindungsstück (1) einen Abschnitt (12) umfasst, welcher das Loch (13), welches in der zweiten Ausnehmung (54) untergebracht ist, umfasst.

17. Verfahren zur Montage eines Organs zum Anschluss (1) eines Scheibenwischerblatts an einen Endabschnitt (2) zur Verbindung mit einem Scheibenwischerarm (3), wobei der Endabschnitt (2) ein erstes longitudinales Element (20) und ein zweites Querelement (21) umfasst, welches eine Achse (C) zur Schwenkung des Wischers gegenüber dem Arm (3) definiert,
wobei das Anschlussorgan (1) ein Loch (13) zur Aufnahme des zweiten Elements (21) des Arms (3) umfasst, wobei das Verfahren einen Schritt des Anordnens des Anschlussorgans (1) umfasst, bei welchem das zweite Element (21) des Arms (3) in das Loch (13) des Anschlussorgans (1) eingeführt wird,
**dadurch gekennzeichnet, dass** es einen nachfolgenden Schritt umfasst, bei welchem eine Abdeckung (4) nach einem der Ansprüche 1 bis 11 an dem Verbindungsendabschnitt (2) des Verbindungsarms (3) befestigt wird, um diesen Letzteren und mindestens einen Abschnitt des Anschlussorgans (1) abzudecken.

18. Verfahren nach Anspruch 17, wobei die Abdeckung (4) an dem Verbindungsendabschnitt (2) durch elastische Mittel zum Einrasten (49) und/oder zum Eingriff (50), welche mit dem ersten Element (20) des Arms (3) zusammenwirken, befestigt wird.

## Claims

1. Cap (4) for a windscreen wiper for covering an end portion (2) of a wiper arm (3), said end portion being configured such as to be connected to a windscreen wiper blade and comprising a first element (20) designed to extend in a first, "longitudinal", direction (B) relative to the cap (4) and a second element (21) defining a pivoting axis (C) of the blade vis-à-vis the arm designed to extend in a direction transverse to the first direction, said cap (4) comprising a first housing (47, 53) for receiving said first (20) and second (21) elements of the end portion (2), said first housing (47, 53) being limited in the transverse direction by at least one wall (43, 44), the cap being **characterized in that** it has an elongate form along an elongation axis (B), and **in that** said first housing (47, 53) comprises a first portion (47) extending along said elongation axis (B) and configured such as to receive said first element (20) .

2. Cap (4) according to Claim 1, **characterized in that** said first housing (47, 53) comprises a second portion (53) extending perpendicularly to said elongation axis (B) and configured such as to receive said second element (21).

3. Cap (4) according to Claim 2, **characterized in that** said second portion (53) extends between two lateral longitudinal walls (43, 44) of the cap (4), which form longitudinal ends of this second portion (53).

4. Cap (4) according to Claim 3, **characterized in that** it comprises a second housing (54) for receiving a portion of the windscreen wiper blade, such as a connector (1) of said blade.

5. Cap (4) according to Claim 4, **characterized in that** the second housing (54) extends along said elongation axis (B).

6. Cap (4) according to Claim 5, **characterized in that** said second portion (53) of the first housing (47, 53) traverses or communicates with said second housing (54).

7. Cap (4) according to one of the preceding claims, **characterized in that** it comprises fixing means (49, 50) configured such as to interact with said arm (20) .

8. Cap (4) according to Claim 7, **characterized in that** said fixing means comprise elastic snap-fastening (49) and/or engagement (50) means.

9. Cap (4) according to Claim 7 or 8, **characterized in that** said fixing means (49, 50) are located in said first housing (47, 53), preferably in the first portion (47).

10. Cap (4) according to one of Claims 7 to 9, **characterized in that** said fixing means comprise a stud (50) configured such as to be engaged in an end recess (26) of said first element (20) of the arm, which is, for example, tubular.

11. Cap (4) according to one of Claims 4 to 10, **characterized in that** the first portion (47) of the first housing and the second housing (54) each have a transverse section having substantially a U-shaped form, with a common longitudinal wall (48).

12. Capped wiper arm, comprising an arm (3) comprising an end portion (2) linking to a wiper blade, said end portion (2) being configured such as to be connected to a wiper blade and comprising a first, longitudinal element (20) and a second, transverse element (21) defining a pivoting axis (C) of the blade vis-à-vis the arm (3), and a cap (4) according to one of Claims 1 to 11.

13. Capped wiper arm according to Claim 12, **characterized in that** the cap (4) comprises fixing means (49, 50) interacting with said first element (20) of the arm (3).

14. Capped wiper arm according to Claim 13, **characterized in that** said first element (20) of the arm (3) is tubular and comprises an internal longitudinal recess having an end opening out on an opening (26), and **in that** the cap (4) comprises a fixing stud (50) designed to engage in said opening (26).

15. Assembly comprising a capped arm according to one of Claims 12 to 14 and a connector (1) for attaching the arm (3) to a wiper blade, said connector (1) comprising an orifice (13) for receiving said second element (21) of the arm (3) and also means (11) linking to at least one blade member, such as a stiffening spine or a longitudinal body of the blade.

16. Assembly according to Claim 15, wherein the connector (1) comprises a portion (12) comprising said orifice (13), which is housed in said second housing (54) .

17. Method for fitting a wiper blade connection member (1) on a linking end portion (2) of a wiper arm (3), said end portion (2) comprising a first, longitudinal element (20) and a second, transverse element (21) defining a pivoting axis (C) of the blade vis-à-vis the arm (3), said connection member (1) comprising an orifice (13) for receiving said second element (21) of the arm (3), said method comprising a step of placing said connection member (1) in which the second element (21) of the arm (3) is inserted in said orifice (13) of the connection member (1), **characterized in that** it comprises a subsequent step in which a cap (4) according to one of Claims 1 to 11 is fixed on the linking end portion (2) of the arm (3) in such a manner as to cover the latter and at least a portion of the connection member (1).

18. Method according to Claim 17, wherein said cap (4) is fixed on the linking end portion (2) by elastic snap-fitting (49) and/or engagement (50) means interacting with said first element (20) of the arm (3) .
